# EUROPEAN PATENT APPLICATION

(11) **EP 1 679 890 A1**
(43) Date of publication of application: **12.07.2006**
(21) Application number: 05112388.3
(22) Date of filing: 19.12.2005
(51) Int. Cl.: H04N 5/74

(54) **Space-saving backprojection device**

(30) Priority: 07.01.2005 FR 0550071
(71) Applicant: Thomson Licensing S.A., 92100 Boulogne-Billancourt (FR)
(72) Inventor: SACRE, Jean-Jacques, 92648, BOULOGNE CEDEX (FR); BENOIT, Pascal, 92648, BOULOGNE CEDEX (FR)

(57) **Abstract**

The invention relates to a backprojection device (2) comprising an image source (20), a projection lens (21), a folding mirror (23) and a projection screen (24), the image source transmitting an image beam (25) through the projection lens towards the folding mirror, the folding mirror reflecting the beam towards the projection screen.

In order to reduce the height of the device beneath the screen, the angle (β) between the surface of the folding mirror and the screen is greater than or equal to 45° and the optical axis (250) of the beam strikes the screen in a zone (A) adjacent to the edge opposite the projection lens, the zone having a height (*h*') less than or equal to a quarter of the height of the screen (*h*).

## Description

### 1. Field of the invention.

The present invention relates to a space-saving backprojector for a given screen size.

### 2. Technical Background.

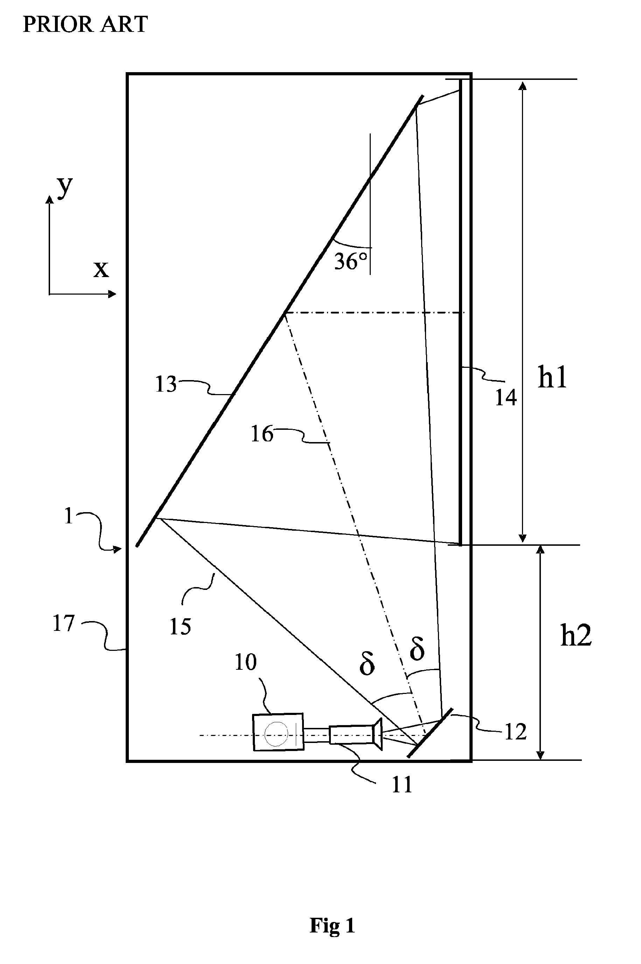

According to the prior art, backprojectors such as the backprojector 1 illustrated with reference to **Figure 1** are known.

The backprojector 1 comprises:
- a booth 17;
- an image source 10;
- a projection lens 11 illuminated by an image beam produced by the source 10;
- a first folding mirror 12 which folds the incident beam 15 originating from the projection lens 11;
- a second folding mirror 13 which folds the incident beam 15 originating from the first folding mirror 12 and which makes an angle of approximately 36° with the vertical; and
- a vertical backprojection screen 14 with a height of *h1*.

The beam 15 is symmetrical relative to its optical axis 16.

As indicated in Figure 1, in order that the projection lens and the image source do not intersect the beam, they must be placed beneath the screen 14. Also, such backprojectors have the disadvantage of having a relatively large height h2 beneath the screen (or "chin"). Thus, the space requirement from a frontal view point is relatively large, whereas on a television with a conventional tube or an LCD or plasma screen, this chin height is relatively small.

### 3. Summary of the invention.

The object of the invention is to alleviate these disadvantages of the prior art.

More particularly, the object of the invention is to reduce the chin height in a backprojector while retaining a relatively shallow depth.

Consequently, the invention proposes a backprojection device comprising an image source, a projection lens, a folding mirror and a projection screen, the image source transmitting an image beam through the projection lens towards the folding mirror, the folding mirror reflecting the said beam towards the projection screen.
According to the invention, the angle between the surface of the folding mirror and the screen is greater than or equal to 45° and the optical axis of the beam strikes the screen in a zone adjacent to the edge opposite the projection lens, the zone having a height of less than or equal to a quarter of the height of the screen.

Preferably, the zone has a height of less than or equal to a tenth of the height of the screen.

According to a particular feature, the angle between the surface of the folding mirror and the screen is less than or equal to 55°.

According to an advantageous feature, the minimum distance between the folding mirror and the screen is less than or equal to 5 cm and preferably less than or equal to 1 cm.

According to a particular feature, the projection lens is a wide-angle lens, with a first half-field angle greater than or equal to 50°.

Advantageously, the projection lens comprises a rear group and a front group separated by a deflection mirror.

Preferably, the optical distance between the exit pupil and the screen is less than or equal to the height of the screen.

### 4. List of the figures.

The invention will be better understood and other features and advantages will appear on reading the following description, the description making reference to the appended drawings amongst which:
- Figure 1 illustrates a backprojector known per se;
- Figure 2 is a backprojector according to a particular embodiment of the invention, in a side view; and
- Figures 3 and 4 show a backprojector corresponding to a variant embodiment of the invention in a side and front view respectively.

### 5. Detailed description of the invention.

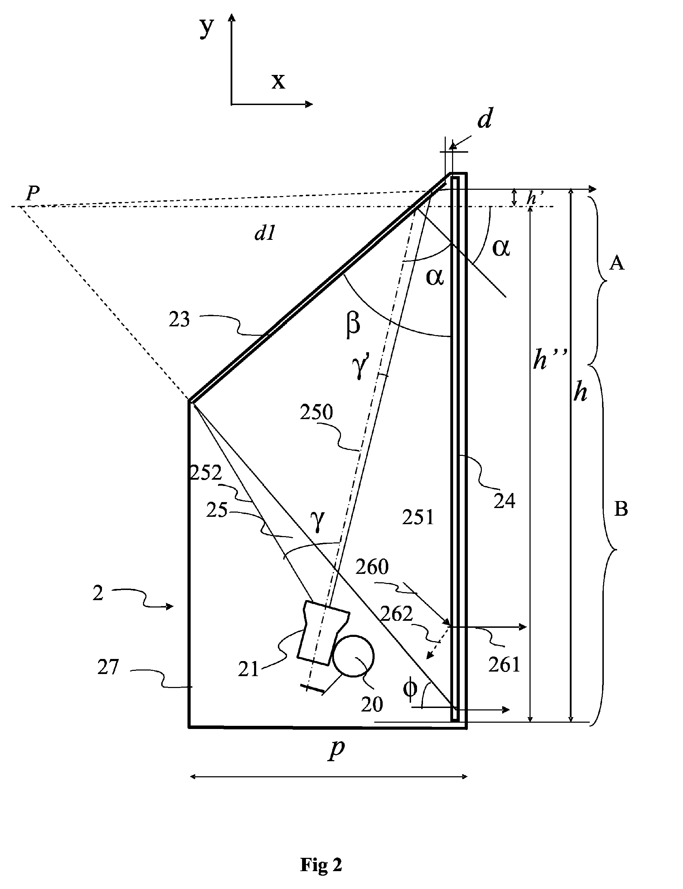

**Figure 2** shows a backprojector 2 according to a particular embodiment of the invention which comprises:
- a booth 27;
- an image source 20 (typically a source producing a light beam and an imager illuminated by the light beam through appropriate optical elements; the imager is, for example, a DMD ("Digital Micromirrors Device" from Texas Instruments ®), a transmissive LCD ("Liquid Crystal Display") or an LCOS ("Liquid Crystal On Silicon")).
- a projection lens 21 illuminated by an imaging beam produced by the source 20;
- a flat folding mirror 23 which folds the incident beam 25 originating from the projection lens 21; and
- a backprojection screen 24 with a height of h.

The projection lens 21 is preferably a wide-angle lens, that is to say with a half-field angle γ greater than or equal to 50°. In the embodiment of Figure 2, it is equal to 54°.

The optical axis of the incident beam 25 makes an angle α with the perpendicular of the folding mirror 23 preferably lying between 48° and 50° and more generally strictly greater than 45° and less than or equal to 55° according to the invention, which makes it possible to have the smallest possible depth.

The normals to the mirror 23 and to the screen 24 are in one and the same plane. The mirror 23 and the screen 24 are symmetrical relative to a vertical mid-plane of the backprojector 2; the optical axis of the beam 25 before and after reflection on the mirror 23 is also in this mid-plane. According to the invention, the optical axis 250 of the beam 25 strikes the screen 24 in its top part supposing that the projection lens is in the bottom part of the booth 27, the beam 25 being propagated from bottom to top before striking the mirror 23. More precisely, the optical axis 250 strikes the screen 24 in a zone marked A in Figure 2 whose height is preferably less than or equal to a quarter of the height of the screen 24 and yet more preferably a tenth: taking *h*' as the distance from the optical axis 250 to the point of impact on the screen 24 with the top of the screen 24, and *h* as the height of the screen 24, h' is less than or equal to *h*/4 and yet more preferably *h*/10.

The mirror 23 sends the entire beam 25 back to the screen 24. It is preferably trapezoidal. According to a variant embodiment, it is rectangular.

The top side of the mirror 23 is parallel to the screen 24. The top of the mirror 23 and the screen 24 are preferably substantially adjacent, with a distance d separating them being less than or equal to 5 cm and preferably less than or equal to 1 cm.

According to the invention, the angle β that the mirror 23 makes with the screen 24 is greater than 45° and preferably lies between 48° and 50° and more generally strictly greater than 45° and less than or equal to 55°. The smaller the angle β and the closer the mirror 23 to the screen 24, the shallower the depth *p* of the booth 27 and it may approach half of the height of the screen 24.

The projected image is substantially off-axis, the angle γ' that the optical axis 250 of the beam 25 at the exit of the projection lens 21 makes with the ray 251 closest to the screen is, for example, equal to 6°, while remaining less than 20° and preferably less than or equal to 15°. According to the example illustrated, *h*' is for example close to 62 mm when γ' is 6°, with an optical distance *d1* between the exit pupil of the projection lens 21 (whose image P before folding of the beam is shown in Figure 2) of 590 mm and a screen height h of 620 mm. In general, the higher the optical axis strikes the mirror and the closer the projection lens is to the screen, the smaller γ' is.

The beam 25 before the folding performed by the folding mirror 23 is shown in dashed lines in Figure 2. It should be noted that this way of folding goes counter to the preconceptions of those skilled in the art who do not fold the projection beam in this manner with, in particular, an angle β, between the surface of the folding mirror and the screen, greater than or equal to 45° and preferably less than or equal to 55° and an optical axis 250 of the beam 25 striking the screen 24 in a zone substantially adjacent to the edge of the screen 24 opposite the projection lens 21, this zone having a height less than or equal to a quarter of the height of the screen and preferably a tenth of the height of the screen.

This unusual disposition, according to the invention, means that the central field close to the top of the screen corresponds to the field close to the optical axis.

The screen 24 is a screen formed of a Fresnel lens, preferably refractive, associated with a lenticular screen, the screen 24 being suitable for covering angles of incidence φ close to 0° up to relatively high values (but limited to approximately 60°). This screen is preferably of the refractive type. The configuration of the various elements of the backprojector and particularly of the mirror 23 and the screen 24 makes it possible to be unhampered by the flare obtained by reflection of the image beam on the screen 24: for large angles of incidence, where the losses by reflection are the greatest, the flare is not redirected towards a mirror; it can therefore not return to the screen 24 and therefore does not impair the quality of the image on the screen 24. This is illustrated in Figure 2 by a ray of the image beam 260 that is mainly transmitted towards a viewer in the form of a ray 261 and whose flare 262 obtained by reflection on the screen 24 is lost without impairing the quality of the image.

The image source 20 and the projection lens 21 are of course positioned so that they do not hamper the propagation of the beam 25 particularly after reflection on the mirror 23.

In this manner, in backprojectors with large screens (for example 16:9 screens larger than 1106x620mm), the image source 20 and the projection lens 21 may be contained within the template of the screen 24 from a frontal viewpoint. In order to make it easier to place the image source 20 in such a template, according to a variant embodiment of the invention, the image source comprises a flat folding mirror between the imager and the projection lens 21 so that the optical axis of the image beam before being deflected is substantially horizontal. In this case, the various elements of the image source with the exception of the deflection mirror are placed on one side of the backprojector.

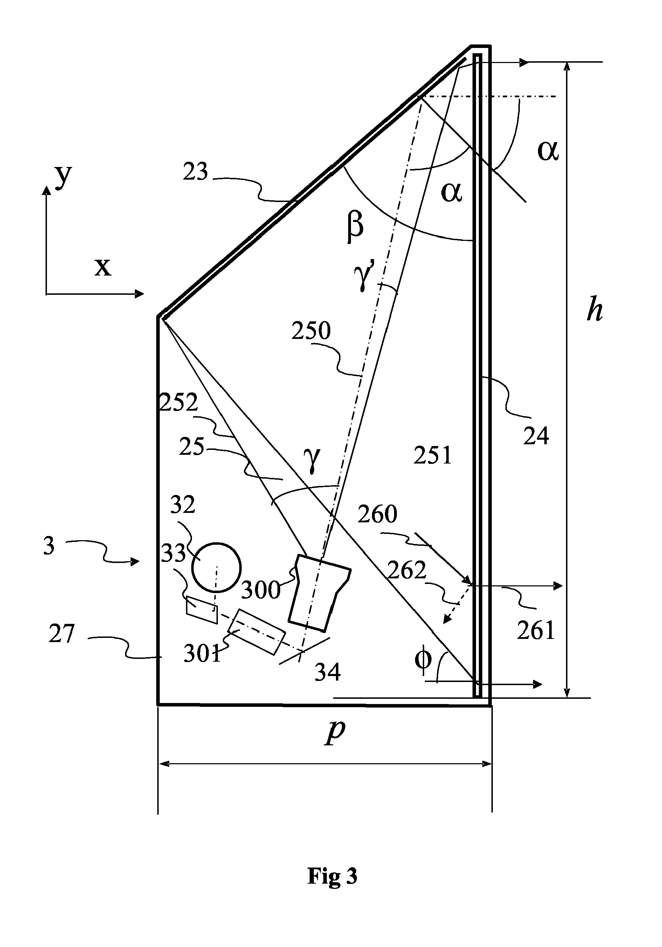

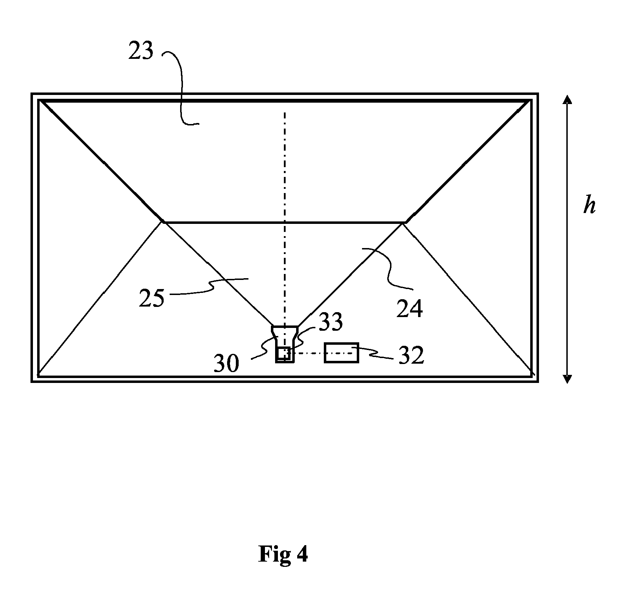

According to a variant embodiment of the invention that is particularly well suited to backprojectors with small screens (for example 16:9 screens equal to or smaller than 1106x620mm), the projection lens is folded so that the image source 20 and the projection lens 21 are contained in the template of the screen 24 from a frontal viewpoint. A backprojector 3 according to such a variant is illustrated in **Figures 3 and 4**.

The backprojector 3 comprises elements similar to the elements 23, 24 and 27 of the backprojector 2; they are also similarly arranged. They therefore bear the same reference numbers and will not be described further.

The backprojector 3 comprises:
- an image source 32 similar to the source 20;
- a projection lens 30 comprising a rear group 301 of lenses and a front group 300 of lenses;
- a first deflection mirror 33 folding the image beam originating from the source 32 towards the rear group of lenses 301; and
- a second deflection mirror 34 folding the image beam originating from the rear group 301 towards the front group 300.

These elements 30 and 32 to 34 are placed beneath the beam 25 originating from the front group 300 of lenses so as not to hamper its propagation.

The optical axis of the mirror 34 and of the rear group 301 and front group 300 lies in the mid-plane of the screen 24. The optical axis of the front group 300 is inclined so that the front group 300 illuminates the mirror 23 with a beam 25 similar to that described with reference to Figure 2.

The mirror 34 and the rear group 301 are oriented so that the optical axis of the rear group 301 is deflected towards the optical axis of the front group 300.

The source 32 has an optical axis which does not lie in the mid-plane of the screen 24. Thus, the depth *p* of the booth 27, its width and its height are not increased.

Naturally, the invention is not limited to the embodiments described above.

In particular, the backprojector may be oriented differently (the top and bottom parts being, for example, inverted (the optical axis of the beam striking the mirror being oriented from top to bottom) or becoming right and left parts (the optical axis of the beam striking the mirror or the screen being horizontal)).

The backprojector screen may have different sizes (for example 15", 21 ") and/or different formats (for example 16:9 or 4:3).

Those skilled in the art may also, according to the invention, use any image source comprising one or more light sources, one or more imagers with appropriate optical elements (mirrors, polarizers, lenses and/or prisms for example).

## Claims

1. Backprojection device (2, 3) comprising an image source (20), a projection lens (21, 30), a folding mirror (23) and a projection screen (24), the said image source transmitting an image beam (25) through the said projection lens towards the said folding mirror, the said folding mirror reflecting the said beam towards the said projection screen,
**characterized in that** the angle (β) between the surface of the said folding mirror and the said screen is greater than or equal to 45°,
and **in that** the optical axis (250) of the beam strikes the said screen in a zone (A) adjacent to the edge opposite the projection lens, the said zone having a height (h') less than or equal to a quarter of the height of the screen (h).

2. Device according to Claim 1, **characterized in that** the said zone has a height of less than or equal to a tenth of the height of the screen.

3. Device according to either one of Claims 1 and 2, **characterized in that** the angle between the surface of the said folding mirror and the said screen is less than or equal to 55°.

4. Device according to any one of Claims 1 to 3, **characterized in that** the minimum distance (d) between the said folding mirror and the said screen is less than or equal to 5 cm.

5. Device according to Claim 4, **characterized in that** the minimum distance between the said folding mirror and the said screen is less than or equal to 1 cm.

6. Device according to any one of Claims 1 to 5, **characterized in that** the said projection lens is a wide-angle lens, with a first half-field angle (γ) greater than or equal to 50°.

7. Device according to any one of Claims 1 to 6, **characterized in that** the said projection lens (30) comprises a rear group (301) and a front group (300) separated by a deflection mirror.

8. Device according to any one of Claims 1 to 7, **characterized in that** the optical distance (d1) between the exit pupil and the said screen is less than or equal to the height of the said screen.
